# EUROPÄISCHE PATENTSCHRIFT

(11) **EP 1 023 944 B1**
(45) Veröffentlichungstag und Bekanntmachung des Hinweises auf die Patenterteilung: **07.08.2002**
(21) Anmeldenummer: 99101435.8
(22) Anmeldetag: 27.01.1999
(51) Int. Cl.: B03B 9/06, B29B 17/02, B07B 9/00

(54) **Verfahren und Einrichtung zur Abfallsortierung**
Method and device for sorting waste material
Procédé et dispositif pour le tri de déchets

(43) Veröffentlichungstag der Anmeldung: 02.08.2000
(73) Patentinhaber: Isis GmbH Servicegesellschaft für Planung und Instandhaltung von Entsorgungs- und Industrieanlagen, 41061 Mönchengladbach (DE)
(72) Erfinder: Hüskens, Jürgen, 41748 Viersen (DE); Dell, Thomas, 52428 Jülich (DE); Jauer, Hermann, 40699 Erkrath (DE); Steinhauer, Johannes, 41469 Neuss (DE)
(74) Vertreter: Sparing, Rolf Klaus

(56) Entgegenhaltungen:
- EP-A- 0 530 934
- DE-A- 4 414 112
- DE-U- 29 722 242
- DE-U- 29 800 229

## Beschreibung

Die vorliegende Erfindung betrifft ein Verfahren und Einrichtung zur Abfallsortierung nach dem Oberbegriff des Anspruchs 1 bzw. des Anspruchs 8.

Aus der DE 198 00 521 ist ein Verfahren und eine Einrichtung zur Abfallsortierung bekannt, bei dem bzw. bei der der Abfall in zwei Siebstufen in eine Grob-, eine Mittel- und eine Feinfraktion unterschiedlicher Korngrößen aufgespaltet wird. Weiterhin ist eine Aufspaltung der Mittefraktion mittels einer Windsichtung in Schwergut und in Leichtgut vorgesehen. Um sortenreine Wertstoffe unter weitgehender Vermeidung von Handsortierung in wirtschaftlicher Weise zu produzieren, wird eine automatisierte Erkennung und Abtrennung der einzelnen Abfallobjekte vorgeschlagen, wobei das Schwergut in Schwergutfraktionen und die Feinfraktion in Sortierfraktionen mittels automatischer Sortiereinrichtungen sortiert wird.

Mit diesem bekannten Verfahren bzw. dieser bekannten Einrichtung läßt sich jedoch nur eine eingeschränkte Qualität bzw. Reinheit der produzierten Schwergut- und Sortierfraktionen erzielen. Im Schwergut landen teilweise Abfallobjekte, die eigentlich dem Feingut zuzuordnen sind und umgekehrt Abfallobjekte des Schwergutes im Feingut.

Aufgabe der vorliegenden Erfindung ist es, ein Verfahren und eine Einrichtung zur Abfallsortierung nach dem Oberbegriff des Anspruchs 1 bzw. des Anspruches 8 zu schaffen, mit dem bzw. der eine hohe Reinheit der produzierten Fraktionen bei einer hohen Durchsatzleistung der Abfallsortierung erreichbar ist.

Diese Aufgabe wird durch ein Verfahren und eine Einrichtung mit den Merkmalen des Anspruchs 1 bzw. des Anspruchs 8 gelöst.

Auf diese Weise lassen sich sortierte, quasi Monofraktionen mit hoher Durchsatzleistung produzieren, die allenfalls noch geringe Störstoffe aufweisen. Ferner wird es hierdurch ermöglicht, die Schwergut- und Sortierfraktionen jeweils einer speziell auf diese abstimmbaren Nachsortierung, auf einfache mechanische Weise zu unterziehen.

Bei einer Identifikation jeweils einer Sortierfraktion durch eine IR - Kamera und einem Ausblenden der jeweils anderen Sortierfraktionen durch geeignete Filtermittel, lassen sich auf einen IR - Bereich standartisierte Erkennungseinrichtungen mit hoher Durchsatzleistung vorteilhaft verwenden. Eine IR - Kamera kann hierbei einen oder mehrere IR - Sensoren aufweisen und mittels Hardware- oder Software - Filtern auf eine bestimmte Sortierfraktion abgestimmt werden. Die Funktion der Filter kann auch vorteilhaft durch einen mittels Software durchführbaren Vergleich aufgenommener Reflektionslinien mit in einer Datenbank gespeicherten Reflektionslinien erfolgen. Hierbei können charakteristische Verläufe der Reflektionslinien von einzelnen Materialien zur Erkennung genutzt werden.

Bei einem stufenweisen Aussortieren der Sortierfraktionen mittels Trenneinrichtungen, die jeweils eine IR - Kamera zur Materialidentifizierung und ein pneumatisches Austragsystem umfassen, lassen sich hohe Abtrenngeschwindigkeiten erzielen und ein sicheres Erkennen der in eine nachfolgende Stufe übergebenen Abfallobjekte gewährleisten. Schwierigkeiten durch Lageänderungen der Abfallobjekte nach einer Übergabe auf eine nachfolgende Trenneinrichtung können hiermit zuverlässig vermieden werden.

Bei einer Identifikation jeweils einer Schwergutfraktion durch eine IR - Kamera und einem Ausblenden der jeweils anderen Schwergutfraktionen durch geeignete Filtermittel, lassen sich auf einen IR - Bereich standartisierte Erkennungsvorrichtungen mit hoher Durchsatzleistung vorteilhaft verwenden.

Bei einem stufenweisen aussortieren der Schwergutfraktionen mittels Sortiereinrichtungen, die jeweils eine IR - Kamera zur Materialidentifizierung und ein pneumatisches Austragsystem umfassen, lassen sich hohe Abtrenngeschwindigkeiten erzielen und ein sicheres Erkennen der in eine nachfolgende Stufe übergebenen Abfallobjekte gewährleisten.

Werden die Schwergutfraktionen durch eine erste Videokamera nach äußeren Merkmalen erfaßt und durch eine mit der ersten Videokamera verbunde IR - Kamera dem Material nach identifiziert und stufenweise mittels Sortiereinrichtungen abgetrennt, die jeweils eine Videokamera zur Positionsbestimmung und zur Wiedererkennung bereits identifizierter, von einer Sortiereinrichtung auf eine andere übergebene Abfallkörper und ein pneumatisches Austragsystem umfassen, ist nur eine einmalige Materialerkennung der Abfallobjekte und danach nur ein Wiedererkennen der Abfallobjekte an Hand ihrer äußeren Form zum Abtrennen notwendig und eine besonders kostengünstige Sortierung ermöglicht. Hierbei können Lageänderungen der Abfallobjekte nach Übergabe von einer Sortiereinrichtung in eine nachgeschaltete Sortiereinrichtung nur noch äußerst selten zu Erkennungsfehlern führen.

Werden die Schwergutfraktionen durch eine IR - Kamera dem Material nach identifiziert und auf einem gelochten Förderband liegend abschnittsweise mittels eines durch Lochungen des Förderbandes blasenden pneumatischen Austragsystem abgetrennt, lassen sich die Investitions- und Betriebskosten verringern und Lageveränderungen von bereits erkannten Abfallobjekten infolge einer Übergabe von einem Förderband auf ein nachgeschaltetes Förderband von vornherein vermeiden.

Um relativ grobstückige Abfallobjekte frühzeitig und weitgehend vollständig abzutrennen liegt der Sieblochdurchmesser der ersten Siebtrommel bevorzugt in dem Bereich von 200 bis 260 mm. Der Sieblochdurchmesser der zweiten Siebtrommel liegt bevorzugt in dem Bereich von 100 bis 150 mm, was eine sehr günstige Aufspaltung betreffend des Mengenverhältnis von Mittel- und Feinfraktionen bewirkt und die nachgeschalteten Sortier- und Trennvorgänge erleichtert und effektiv ablaufen läßt.

Weitere Ausgestaltungen der Erfindung sind der nachfolgenden Beschreibung und den Unteransprüchen zu entnehmen.

Die Erfindung wird anhand eines in den beigefügten Abbildungen dargestellten Ausführungsbeispiel näher erläutert.

Figur 1 zeigt eine schematische Darstellung einer Einrichtung zur Abfallsortierung.

Figur 2 zeigt schematisch eine erste Ausführungsform einer Sortiereinrichtung.

Figur 3 zeigt schematisch eine zweite Ausführungsform einer Sortiereinrichtung.

Figur 4 zeigt schematisch eine dritte Ausführungsform einer Sortiereinrichtung.

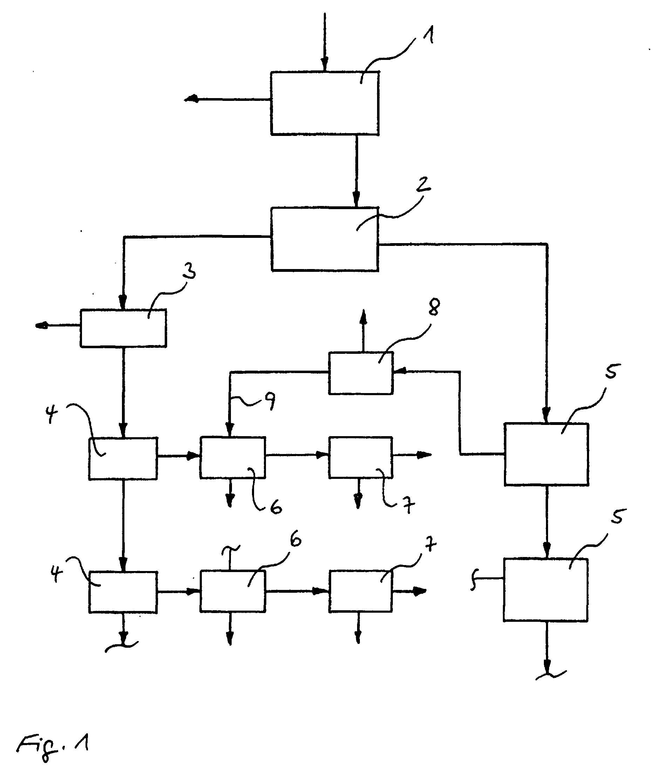

Die in Figur 1 dargestellte Einrichtung umfaßt eine erste Siebtrommel 1 mit einer Sieblochgröße von in etwa 250 mm zur Auftrennung des Abfalls in eine erste Grobfraktion und eine zweite Grobfraktion und eine der ersten Siebtrommel 1 nachgeschaltete zweite Siebtrommel 2 mit einer Sieblochgröße von in etwa 130 mm zur Auftrennung der zweiten Grobfraktion in eine Mittelfraktion und eine Feinfraktion. Der zweiten Siebtrommel 2 ist ein Windsichter 3 zur Aufspaltung der Mittelfraktion aus der zweiten Siebtrommel 2 in Schwergut und in Leichtgut nachgeschaltet. Dem Windsichter 3 folgend sind zur Sortierung des Schwergutes hintereinander geschaltete Sortiereinrichtungen 4 vorgesehen. Jeweils einer Sortiervorrichtung 4 ist ein Sichter 6 nachgeordnet dem jeweils ein Schwergutsieb 7 nachgeschaltet ist. Der Sieblochdurchmesser eines Schwergutsiebes 7 liegt in dem Bereich von 30 bis 100 mm, bevorzugt 40 bis 70 mm.

Der zweiten Siebtrommel 2 sind weiter einander nachgeordnete Trenneinrichtungen 5 zur Sortierung der Feinfraktion in Sortierfraktionen nachgeordnet. Einer Trenneinrichtung 5 ist jeweils ein Feinsieb 8 nachgeschaltet welches über eine Förderer 9 mit einem Sichter 6 derart verbunden ist, daß weitgehend materialgleiche Schwergutfraktionen und Sortierfraktionen durch diesen gesichtet werden. Der Sieblochdurchmesser eines Feinsiebes 8 liegt in dem Bereich von 20 bis 60 mm, bevorzugt von 30 bis 50 mm.

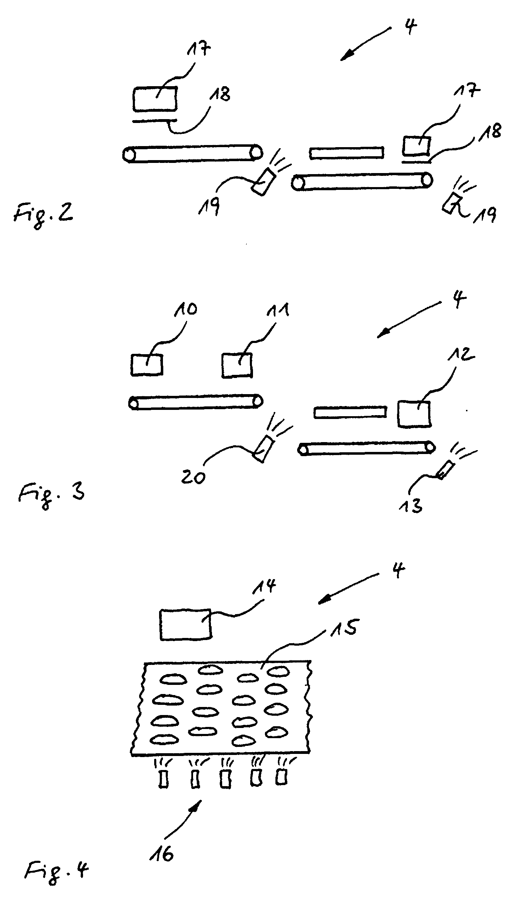

Die in Figur 2 schematisch dargestellte Ausführungsform einer Sortiereinrichtung umfaßt eine IR - Kamera 17 mit zugeordneten Filtermittel 18, die auf ein Förderband gerichtet ist. Am stromabwärts liegenden Ende des Förderbandes ist ein pneumatisches Austragsystem 19 vorgesehen. Über dem zweiten Förderband ist quer zu diesem ein Aufnahmeband für aussortierte Abfallobjekte angeordnet. Alternativ zu dem Filtermittel 18 kann auch ein Vergleich der reflektierten Strahlung mit in einer Datenbank katalogähnlich abgespeicherten unterschiedlichen Reflexionslinien vorgesehen werden.

Die in Figur 3 schematisch dargestellte, zweite Ausführungsform einer Sortiereinrichtung umfaßt eine Videokamera 10, die auf den Anfangsabschnitt eines Förderbandes gerichtet ist und eine IR - Kamera 11 die der Videokamera 10 stromabwärts nachgeordnet ist sowie ein pneumatisches Austragssystem 20 welches am Ende des Förderbandes angeordnet ist. Dem ersten Förderband ist ein zweites Förderband nachgeschaltet, daß durch eine weitere Videokamera 12 eingesehen wird. Dem weiteren Förderband ist wiederum ein pneumatisches Austragssystem 13 zugeordnet. Über dem zweiten Förderband ist quer zu diesem ein Aufnahmeband für aussortierte Abfallobjekte angeordnet.

Die in Figur 4 schematisch dargestellte Ausführungsform einer Sortiereinrichtung weist zur Materialidentifizierung eine IR - Kamera 14 auf, die oberhalb eines mit Lochungen versehenen Förderbandes 15 angeordnet ist. Das Förderband 15 ist korrespondierend zu den Lochungen mit einem sich in Längs- und Querrichtung erstreckenden pneumatischen Austragsystem 16 versehen, welches abschnittsweise ansteuerbar ausgestaltet ist. Über dem Förderband 15 sind abschnittsweise quer zu diesem mehrere Aufnahmebänder (nicht dargestellt) zur Aufnahme ausgeblasener Abfallobjekte vorgesehen.

Der in der ersten Siebtrommel 1 ankommende Abfall, wird in eine erste Grobfraktion und in eine zweite Grobfraktion aufgetrennt. Die erste Grobfraktion wird ggfs. einer weiteren Behandlung zugeführt. Die zweite Grobfraktion aus der ersten Siebtrommel 1 gelangt in die zweite Siebtrommel 2 und wird dort in eine Mittelfraktion und in eine Feinfraktion aufgespaltet. Die Mittelfraktion aus der zweiten Siebtrommel 2 gelangt dann in den Windsichter 3 und wird dort in Schwergut und in Leichtgut aufgespalten. Das Leichtgut wird zur weiteren Aufarbeitung bevorzugt einer selektiven Zerkleinerung in einer Hammermühle (nicht dargestellt) unterworfen.

Das Schwergut aus dem Windsichter 3 wird dann den Sortiereinrichtungen 4 zur Sortierung des Schwerguts in Schwergutfraktionen zugeführt. In den Sortiereinrichtungen 4 werden dann stufenweise Getränkekartons, PE, PP, PET und PPK enthaltende Abfallobjekte identifiziert und pneumatisch abgetrennt. Die derart abgetrennten Schwergutfraktionen werden dann zumindest teilweise jeweils dem nachgeschalteten Sichter 6 zugeführt und von Leichtstoffen befreit. Die von Leichtstoffen befreiten Schwergutfraktionen werden anschließend in den nachgeordneten Schwergutsieben 7 von Inertstoffen befreit.

Die aus der zweiten Siebtrommel 2 stammende Feinfraktion wird den hintereinander geschalteten Trenneinrichtungen 5 zugeführt und stufenweise in Sortierfraktionen sortiert. Die derart sortierten Sortierfraktionen werden in den nachgeschalteten Feinsieben 8 von Inertstoffen befreit und über Förderer 9 dem jeweiligen Sichter 6 zur gemeinsamen Sichtung mit einer weitgehend materialgleichen Schwergutfraktion zugeführt.

In Abwandlung des vorgenannten Ausführungsbeispiels einer Einrichtung zur Abfallsortierung kann eine Siebung der sortierten und gesichteten Schwergutfraktionen in den Schwergutsieben 7 entfallen, wenn der Anteil an feinteiligen Inertstoffen gering ist und die gewünschte Qualität bereits nach der Sichtung vorliegt.

## Patentansprüche

1. Verfahren zur Abfallsortierung, bei dem der Abfall in einer ersten Siebstufe zur Auftrennung in eine erste Grobfraktion und in eine zweite Grobfraktion mit einer Sieblochgröße von 180 bis 320 mm gesiebt wird, die zweite Grobfraktion in einer zweiten Siebstufe zur Auftrennung in eine Mittelfraktion und in eine Feinfraktion mit einer Sieblochgröße von 80 bis 160 mm gesiebt wird, von der Mittelfraktion Schwergut mittels Abtrennung von Leichtgut in einem Windsichter abgespaltet wird und das Schwergut in Schwergutfraktionen und die Feinfraktion in Sortierfraktionen sortiert wird, **dadurch gekennzeichnet, daß** die Schwergutfraktionen zunächst zur Abscheidung von folienartigen Leichtstoffen in Sichtern gesichtet und ggf. anschließend zur Abscheidung von feinteiligen Inertstoffen in Sieben gesiebt und die Sortierfraktionen zunächst zur Abscheidung von kleinteiligem Feingut in weiteren Sieben gesiebt und anschließend zur Abscheidung von Leichtstoffen in die Sichter geleitet und gesichtet werden, welche im wesentlichen materialgleiche Schwergutfraktionen sichten.

2. Verfahren nach Anspruch 1, **dadurch gekennzeichnet, daß** jeweils eine Sortierfraktion durch jeweils eine IR-Kamera identifiziert wird und die jeweils anderen Sortierfraktionen durch geeignete Filtermittel ausgeblendet werden.

3. Verfahren nach Anspruch 1 oder 2, **dadurch gekennzeichnet, daß** die Sortierfraktionen stufenweise mittels Trenneinrichtungen aussortiert werden, die jeweils eine IR-Kamera zur Materialidentifizierung und ein pneumatisches Austragsystem umfassen.

4. Verfahren nach einem der Ansprüche 1 bis 3, **dadurch gekennzeichnet, daß** jeweils eine Schwergutfraktion durch jeweils eine IR-Kamera identifiziert wird und die jeweils anderen Schwergutfraktionen durch geeignete Filtermittel ausgeblendet werden.

5. Verfahren nach einem der Ansprüche 1 bis 4, **dadurch gekennzeichnet, daß** die Schwergutfraktionen stufenweise mittels Sortiereinrichtungen aussortiert werden, die jeweils eine IR-Kamera zur Materialidentifizierung und ein pneumatisches Austragsystem umfassen.

6. Verfahren nach einem der Ansprüche 1 bis 3, **dadurch gekennzeichnet, daß** die Schwergutfraktionen durch eine erste Videokamera nach äußeren Merkmalen erfaßt und durch eine mit der ersten Videokamera verbundene IR-Kamera dem Material nach identifiziert und stufenweise mittels Sortiereinrichtungen abgetrennt werden, die jeweils eine Videokamera zur Positionsbestimmung und zur Wiedererkennung bereits identifizierter, von einer Sortiereinrichtung auf eine andere übergebene Abfallkörper und ein pneumatisches Austragsystem umfassen.

7. Verfahren nach einem der Ansprüche 1 bis 3, **dadurch gekennzeichnet, daß** die Schwergutfraktionen durch eine IR-Kamera dem Material nach identifiziert und auf einem gelochten Förderband liegend abschnittsweise mittels eines durch Lochungen des Förderbandes blasenden pneumatischen Austragsystems abtrennt werden.

8. Einrichtung zur Abfallsortierung umfassend eine erste Siebtrommel (1) mit einer Sieblochgröße von 180 bis 320 mm zur Auftrennung des Abfalls in eine erste Grobfraktion und in eine zweite Grobfraktion, eine dieser nachgeschalteten zweiten Siebtrommel (2) mit einer Sieblochgröße von 80 bis 160 mm zur Auftrennung der zweiten Grobfraktion in eine Mittelfraktion und eine Feinfraktion, einen der zweiten Siebtrommel (2) nachgeschalteten Windsichter (3) zur Aufspaltung der Mittelfraktion in Schwergut und in Leichtgut und Sortiereinrichtungen (4) zur Sortierung des Schwerguts in Schwergutfraktionen und Trenneinrichtungen (5) zur Sortierung der Feinfraktion in Sortierfraktionen, **dadurch gekennzeichnet, daß** den Sortiereinrichtungen (4) zumindest teilweise jeweils ein Sichter (6) ggf. mit einem nachgeordneten Schwergutsieb (7) und den Trennvorrichtungen (5) zumindest teilweise jeweils ein Feinsieb (8) nachgeschaltet ist, welches über einen Förderer (9) einem der Sichter (6) zur gemeinsamen Sichtung mit einer weitgehend materialgleichen Schwergutfraktion zugeordnet ist.

9. Einrichtung nach Anspruch 8, **dadurch gekennzeichnet, daß** jede Trenneinrichtung (5) eine IR-Kamera zur Identifizierung einer Sortierfraktion aufweist, welche mit Filtermitteln zum Ausblenden der jeweils anderen Sortierfraktionen versehen ist.

10. Einrichtung nach Anspruch 8 oder 9, **dadurch gekennzeichnet, daß** die Trenneinrichtungen (5) stufenweise hintereinander angeordnet sind und jeweils eine IR-Kamera und ein pneumatisches Austragsystem aufweisen.

11. Einrichtung nach einem der Ansprüche 8 bis 10, **dadurch gekennzeichnet, daß** jede Sortiereinrichtung (4) eine IR-Kamera (17) zur Identifizierung einer Schwergutfraktion aufweist, welche mit Filtermitteln (18) zum Ausblenden der jeweils anderen Schwergutfraktionen versehen ist.

12. Einrichtung nach einem der Ansprüche 8 bis 11, **dadurch gekennzeichnet, daß** die Sortiereinrichtungen (4) stufenweise hintereinander angeordnet sind und jeweils eine IR-Kamera (17) und ein pneumatisches Austragsystem (19) aufweisen.

13. Einrichtung nach einem der Ansprüche 8 bis 10, **dadurch gekennzeichnet, daß** eine erste Videokamera (10) zur Erfassung der äußeren Merkmale der Schwergutfraktionen und eine mit dieser verbundene IR-Kamera (11) zur Materialidentifizierung vorgesehen sind und die Sortiereinrichtungen (4) jeweils eine Videokamera (12) zur Positionsbestimmung und zur Wiedererkennung bereits identifizierter, von einer Sortiereinrichtung auf eine nachgeordnete übergebener Abfallkörper und ein pneumatisches Austragsystem (13) aufweisen.

14. Einrichtung nach einem der Ansprüche 8 bis 11, **dadurch gekennzeichnet, daß** die Sortiereinrichtungen durch eine IR-Kamera (14) zur Materialidentifizierung und ein gelochtes Förderband (15) und ein pneumatisches abschnittsweise ansteuerbares und durch Lochungen des Förderbandes (15) blasendes Austragsystem (16) ausgebildet sind.

## Claims

1. Method for sorting waste in which the waste is screened in a first screening stage to divide it into a first coarse fraction and a second coarse fraction with a screen perforation size of 180 to 320 mm, the second coarse fraction is screened in a second screening stage to divide it into a medium-sized fraction and a fine fraction with a screen perforation size of 80 to 160 mm, heavy material being divided off from lightweight material in the medium-sized fraction in a pneumatic sifter and the heavy material being divided into heavy material fractions and the fine fraction into fractions for sorting, **characterised in that** the heavy material fractions are first sifted in sifters to separate out film-type lightweight materials and then optionally screened through perforated plates to separate out fine particle inert substances and the sorting fractions are first of all screened through further perforated plates to separate out small particle fine material and then routed to the sifters to separate out lightweight materials and sifted, these sifters substantially sifting out heavy material fractions consisting of the same material.

2. Method according to claim 1, **characterised in that** one fraction to be sorted respectively is identified by one IR-camera respectively and the respective other fractions to be sorted are blanked out by suitable filtering means.

3. Method according to claim 1 or 2, **characterised in that** the sorting fractions are separated out in steps by means of separating devices, each of which include an IR-camera to identify material and a pneumatic discharge system.

4. Method according to one of the claims 1 to 3, **characterised in that** one heavy material fraction respectively is identified by one IR-camera respectively and the respective other heavy material fractions are blanked out by suitable filtering means.

5. Method according to one of the claims 1 to 4, **characterised in that** the heavy material fractions are separated out step by step by means of sorting devices, each of which include an IR-camera to identify material and a pneumatic discharge system.

6. Method according to one of the claims 1 to 3, **characterised in that** the heavy material fractions are covered by a video camera collecting data on external characteristics and are identified via their materials by an IR-camera linked to the first video camera and are separated oft in steps using sorting devices, each of which includes a video camera to define the position of items of refuse and recognise the said items again when they have been passed from one sorting device to another and a pneumatic discharge device.

7. Method according to one of the claims 1 to **3, characterised in that the** materials in the heavy material fractions are identified by an IR-camera and separated out section by section on a perforated conveyor belt by means of a pneumatic discharge system blowing through perforations in the conveyor belt.

8. Device for sorting waste comprising a first screening drum (1) with a per(oration size of 180 to 320 mm to divide the waste into a first coarse fraction and a second coarse fraction, a second screening drum (2) following this with a perforation size of 80 to 160 mm to divide the second coarse fraction into a medium-sized fraction and a fine fraction, a pneumatic sifter (3) following the second screening drum (2) to divide the medium-sized fraction into heavy material and lightweight material and sorting devices (4) to sort the heavy material into heavy material fractions and separating devices (5) to sort the fine fraction into sorting fractions, **characterised in that** at least partially one sifter (6) respectively, optionally followed by a heavy material screen (7), is allocated to the sorting devices (4) and at least partially one fine screen (8) respectively follows the separating devices (5), which is allocated via a conveyor (9) to one of the sifters (6) for joint sifting with a heavy material fraction substantially consisting of the same material.

9. Device according to claim 8, **characterised in that** each separating device (5) has an IR-camera to identify a sorting fraction which is provided with filtering means to blank out the respective other sorting fractions.

10. Device according to claim 8 or 9, **characterised in that** the separating devices (5) are arranged in steps one after the other and that each has an IR camera and a pneumatic discharge system.

11. Device according to one of the claims 8 to 10, **characterised in that** each sorting device (4) has an IR-camera (17) to identify a heavy material fraction, which is provided with filtering means (18) to blank out the respective other heavy material fractions.

12. Device according to one of the claims 8 to 11, **characterised in that** the sorting devices (4) are arranged in steps one behind the other and each has an IR-camera (17) and a pneumatic discharge system (19).

13. Device according to one of the claims 8 to 10, **characterised in that** a first video camera (10) to collect data on the external characteristics of the heavy material fractions and an IR-camera (11) linked to this to identify the material are provided and the sorting devices (4) each have a video camera (12) to define the position of and to recognise items of waste, which have already been identified and have been passed from one sorting device to one which follows the said device, and a pneumatic discharge System (13).

14. Device according to one of the claims 8 to 11, **characterised in that** the sorting devices are formed by an IR-camera (14) for identifying the material and a perforated conveyor belt (15) and a pneumatic discharge system (16) which can be triggered in sections and blows through perforations in the conveyor belt (15).

## Revendications

1. Procédé de triage de déchets dans lequel le déchet est tamisé dans un premier étage de tamisage dans le but de séparer une première fraction grossière et une deuxième fraction grossière avec une taille de trous de tamis dans la fourchette de 180 à 320 mm, la deuxième fraction grossière est tamisée dans un deuxième étage de tamisage pour effectuer la séparation d'une fraction moyenne et d'une fraction fine avec une taille de trous de tamis de 80 à 160 mm, une subdivision de la fraction moyenne pour séparer le produit lourd et le produit léger est effectuée dans un séparateur pneumatique et, le produit lourd est trié en fractions de produit lourd et la fraction fine est triée en fractions triées, **caractérisé en ce que** les fractions de produit lourd sont d'abord séparées dans des séparateurs pour effectuer la séparation des substances légères du genre en feuille et, le cas échéant, tamisées ensuite dans des tamis pour effectuer la séparation de substances inertes en petits morceaux et, les fractions triées sont d'abord tamisées dans d'autres tamis pour effectuer la séparation du produit fin se présentant en petits morceaux et sont dirigées ensuite dans ces séparateurs et séparées pour effectuer la séparation des substances légères, lesquels séparateurs séparant en général des fractions de produit lourd formées de matériaux sensiblement identiques.

2. Procédé selon la revendication 1, **caractérisé en ce que** une fraction triée est chaque fois identifiée en utilisant respectivement une caméra infra-rouge (IR) et les autres fractions triées sont chaque fois occultées à l'aide de moyens filtrants appropriés.

3. Procédé selon la revendication 1 ou 2, **caractérisé en ce que** les fractions triées sont séparées par étapes en utilisant des dispositifs séparateurs comprenant chacun une caméra IR pour l'identification du matériau et un système expulseur pneumatique.

4. Procédé selon l'une des revendications 1 à 3, **caractérisé en ce que** une fraction de produit lourd est chaque fois identifiée respectivement par une caméra IR et les autres fractions de produit lourd sont chaque fois occultées à l'aide de moyens filtrants appropriés.

5. Procédé selon l'une des revendications 1 à 4, **caractérisé en ce que** les fractions de produit lourd sont éliminés par étapes en utilisant des dispositifs de triage qui comprennent chacun une caméra IR pour l'identification des matériaux et un système expulseur pneumatique.

6. Procédé selon l'une des revendications 1 à 3, **caractérisé en ce que** les fractions de produit lourd sont détectées d'après des caractéristiques extérieures au moyen d'une première caméra vidéo, et sont identifiées selon le matériau au moyen d'une caméra IR reliée à la première caméra vidéo, et sont séparées par étapes à l'aide de dispositifs de triage qui comprennent chacun une caméra vidéo pour la détermination de position et pour la réidentification de corps de déchet déjà identifiés et transférés d'un dispositif de triage à un autre, et un système éjecteur pneumatique.

7. Procédé selon l'une des revendications 1 à 3, **caractérisé en ce que** les fractions de produit lourd sont identifiées selon le matériau au moyen d'une caméra IR et, disposées sur une bande transporteuse perforée, sont séparées par tronçons, à l'aide d'un système expulseur pneumatique soufflant à travers des perçages ménagés dans la bande transporteuse.

8. Dispositif de triage de déchets, comprenant un premier tambour de tamisage (1) avec une taille de trous de tamisage dans la fourchette de 180 à 320 mm, pour séparer les déchets en une première fraction grossière et une deuxième fraction grossière, installé en aval de celui-ci, un deuxième tambour de tamisage (2) avec une taille de trous de tamisage dans la fourchette de 80 à 160 mm, pour séparer la deuxième fraction grossière en une fraction moyenne et une fraction fine, un séparateur pneumatique (3) installé en aval du deuxième tambour de tamisage (2) pour séparer la fraction moyenne en produit lourd et en produit léger, et des dispositifs de triage (4) pour trier le produit lourd en des fractions de produit lourd et, des dispositifs de séparation (5) pour trier la fraction fine en des fractions triées, **caractérisé en ce que** au moins en partie un séparateur (6) est installé respectivement en aval des dispositifs de triage (4), avec le cas échéant, un tamis pour produit lourd (7) installé en aval et, au moins en partie un tamis fin (8) est installé respectivement en aval des dispositifs de séparation (5), ce tamis fin étant associé à l'un des séparateurs (6) par l'intermédiaire d'un transporteur (9) pour effectuer le triage commun avec une fraction de produit lourd de matériau notablement identique.

9. Dispositif selon la revendication 8, **caractérisé en ce que** chaque dispositif de séparation (5) est équipé d'une caméra IR pour l'identification d'une fraction de tri, laquelle possède des moyens filtrants pour occulter chaque fois les autres fractions de tri.

10. Dispositif selon la revendication 8 ou 9, **caractérisé en ce que** les dispositifs de séparation (5) sont disposés les uns derrière les autres en ordre de marche et présentent chacun une caméra IR et un dispositif expulseur pneumatique.

11. Dispositif selon l'une des revendications 8 à 10, **caractérisé en ce que** chaque dispositif de triage (4) présente une caméra IR (17) pour l'identification d'une fraction de produit lourd, laquelle possède des moyens filtrants (18) pour occulter chaque fois d'autres fractions de produit lourd.

12. Dispositif selon l'une des revendications 8 à 11, **caractérisé en ce que** les dispositifs de triage (4) sont disposés les uns derrière les autres en ordre de marche et présentent chacun une caméra IR (17) et un système expulseur pneumatique (19).

13. Dispositif selon l'une des revendications 8 à 10, **caractérisé en ce que** une première caméra vidéo (10) pour la détection des caractéristiques extérieures des fractions de produit lourd et, reliée à celle-ci, une caméra IR (11) pour l'identification du matériau, sont prévues et **en ce que** les dispositifs de triage (4) sont équipés chacun d'une caméra vidéo (12) pour la détermination de position et pour la réidentification de corps de déchet déjà identifiés et transférés d'un dispositif de triage à un autre installé en aval, et un système d'expulsion pneumatique (13).

14. Dispositif selon l'une des revendications 8 à 11, **caractérisé en ce que** les dispositifs de triage sont constitués d'une caméra IR (14) pour l'identification des matériaux et d'une bande transporteuse (15) perforée et d'un système expulseur (16) pneumatique pouvant être commandé par tronçons et soufflant à travers des perçages ménagés dans la bande transporteuse (15).
